# EUROPÄISCHE PATENTANMELDUNG

(11) **EP 3 270 340 A1**
(43) Veröffentlichungstag der Anmeldung: **17.01.2018**
(21) Anmeldenummer: 16179621.4
(22) Anmeldetag: 15.07.2016
(51) Int. Cl.: G06Q 10/08, G06Q 50/32

(54) **VERFAHREN UND ZUSTELLERINFRASTRUKTUR ZUM QUITTIEREN EINER ÜBERGABE VON EINEM GUT**

(71) Anmelder: Siemens Aktiengesellschaft, 80333 München (DE)
(72) Erfinder: ASCHPURWIS, Carsten, 78464 Konstanz (DE)
(74) Vertreter: Maier, Daniel Oliver

(57) **Zusammenfassung**

Die Erfindung offenbart ein Verfahren zum Quittieren einer Übergabe von einem Gut (2), insbesondere einer Postsendung. Nach Übersenden einer Bestellung (4) von einer Empfängerinfrastruktur (6) zu einer Zustellerinfrastruktur (8), Bereitstellen eines empfängerseitigen Identifikators (10) zu der Bestellung (4) auf der Empfängerinfrastruktur (6), Bereitstellen eines zustellerseitigen Identifikators (12) auf der Zustellerinfrastruktur (8) und Erfassen des empfängerseitigen Identifikators (10) durch die Zustellerinfrastruktur (8) erfolgt Quittieren der Übergabe des Gutes (2) indem der empfängerseitige Identifikator (10) und der zustellerseitige Identifikator (12) abgeglichen werden. Das Quittieren kann auch in Abwesenheit eines Empfängers und erfordert keine Unterschrift.

Die Erfindung offenbart eine Zustellerinfrastruktur (8) zum Quittieren einer Übergabe von einem Gut (2), umfassend ein Empfangsmittel (14), ein Bereitstellungsmittel (16), ein Erfassungsmittel (18) und ein Quittiermittel (20). Das Quittiermittel (20) ist adaptiert, den empfängerseitigen Identifikator (10) und den zustellerseitigen Identifikator (12) abzugleichen und so die Übergabe des Gutes (2) zu quittieren.

## Beschreibung

Die vorliegende Erfindung betrifft ein Verfahren und eine Zustellerinfrastruktur zum Quittieren einer Übergabe von einem Gut, insbesondere von Postsendungen.

Stand der Technik um eine Übergabe von einem Gut von einem Zustellunternehmen an einen Endverbraucher bzw. Empfänger zu quittieren ist eine Bestätigung der Übergabe mittels Unterschrift auf einem mobilen Lesegerät. Die Bezeichnung Gut umfasst hierbei sämtliche zustellbare Waren und Postsendungen wie Pakete, Päckchen und Briefe. Das Zustellunternehmen ist typischerweise ein Postdienstleister, ein Versandunternehmen, ein Lieferdienst, Spediteur oder ein Kurierdienstleister. An den Empfänger wird das Gut an einem Übergabeort, typischerweise sein Zuhause, übergeben und der Empfänger quittiert - eventuell nach einer Überprüfung seiner Person mittels Ausweisdokumenten - mit seiner Unterschrift auf einem mobilen Lesegerät die Übergabe. Das Quittieren mittels Unterschrift erfordert stets die Anwesenheit des Empfängers.

Das Zustellunternehmen erhält das Gut von einem Händler bzw. Retailer, wobei ein Verpacken der Ware erst nach Aufgabe einer Bestellung durch den Endverbraucher bzw. Empfänger erfolgt. Rechtlicher Vertragspartner für den Empfänger ist typischerweise der Händler.

Für den Fall, dass der Empfänger bei einem Übergabeversuch nicht zuhause ist, kann auf der Zustellerinfrastruktur ein alternativer Übergabe- oder ein Ablageort, beispielsweise ein Nachbar, eine unverschlossene Garage, neben der Haustür oder das Treppenhaus, hinterlegt sein. Hierbei kann jedoch kein Quittieren der Übergabe mit der Unterschrift des Empfängers erfolgen und die alternativen Übergabe- oder Ablageorte müssen im Voraus mittels Abstellgenehmigungen, sogenannten Garagenverträgen, vereinbart werden. Der Empfänger muss dem Zustellunternehmen vertrauen, dass das Gut tatsächlich übergeben wurde, und für das Zustellunternehmen besteht das Risiko, dass der Kunde behauptet, das Zustellunternehmen sei gar nicht am Ablageort gewesen und das Gut sei nicht übergeben worden.

Der vorliegenden Erfindung liegt daher die Aufgabe zugrunde, ein verbessertes Quittieren der Übergabe eines Gutes zu ermöglichen. Diese Aufgabe wird durch die in den unabhängigen Ansprüchen beschriebenen Lösungen gelöst.

Die erfindungsgemäße Lösung sieht ein Verfahren zum Quittieren einer Übergabe von einem Gut, insbesondere einer Postsendung, vor, umfassend die Verfahrensschritte:
a) Übersenden einer Bestellung von einer Empfängerinfrastruktur zu einer Zustellerinfrastruktur;
b) Bereitstellen eines empfängerseitigen Identifikators zu der Bestellung auf der Empfängerinfrastruktur;
c) Bereitstellen eines zustellerseitigen Identifikators auf der Zustellerinfrastruktur;
d) Erfassen des empfängerseitigen Identifikators durch die Zustellerinfrastruktur; und
e) Quittieren der Übergabe des Gutes indem der empfängerseitige Identifikator und der zustellerseitige Identifikator abgeglichen werden.

Gemäß einer bevorzugten Ausführungsform kann ein elektronisches Übermitteln des empfängerseitigen Identifikators von der Zustellerinfrastruktur zur Empfängerinfrastruktur erfolgen. Auf diese Weise kann der Empfängerinfrastruktur der empfängerseitige Identifikator durch die Zustellerinfrastruktur bereitgestellt werden, ohne dass ein postalisches Übermitteln erfolgen muss. Auch ist dann der Zustellerinfrastruktur der empfängerseitige Identifikator bereits vor dem Erfassen des empfängerseitigen Identifikators durch die Zustellerinfrastruktur bekannt.

Um eine möglichst schlanke Empfängerinfrastruktur zu ermöglichen, kann der empfängerseitige Identifikator vorzugsweise durch die Zustellerinfrastruktur generiert werden.

Um ein besonders einfaches und rasches Erfassen des empfängerseitigen Identifikators und/ oder des zustellerseitigen Identifikators zu ermöglichen, kann der empfängerseitige Identifikator und/ oder der zustellerseitige Identifikator maschinenlesbar, vorzugsweise optoelektronisch lesbar, sein, beispielsweise als 2D-Code. Auf diese Weise muss kein umständliches händisches Erfassen erfolgen. Die optoelektronische Lesbarkeit eines 2D-Codes erlaubt ein Abscannen ohne dass eine genaue Ausrichtung eines Abbilds des Identifikators erfolgen muss, darüber hinaus weist ein maschinenlesbarer, vorzugsweise optoelektronisch lesbarer Code eine hohe Informationsdichte auf.

Gemäß einer bevorzugten Ausführungsform kann ein Austauschen von Übergabeparametern, beispielsweise Übergabeort und/ oder Übergabezeit, zwischen der Empfängerinfrastruktur und der Zustellerinfrastruktur und ein Bereitstellen besagter Übergabeparameter zu dem empfängerseitigen Identifikator und/ oder dem zustellerseitigen Identifikator erfolgen. So können die Übergabeparameter sowohl auf der Empfängerinfrastruktur, als auch auf der Zustellerinfrastruktur angepasst werden und es kann eine Anpassung auf der jeweils anderen Infrastruktur erfolgen. Das Bereitstellen erhöht den Informationsgehalt von empfängerseitigem Identifikator und/ oder zustellerseitigem Identifikator und kann ein Abrufen der Übergabeparameter erleichtern.

Um eine kundenfreundliche Bestimmung der Übergabeparameter durch den Empfänger zu ermöglichen, kann das Bestimmen der Übergabeparameter empfängerseitig auf der Empfängerinfrastruktur und/ oder der Zustellerinfrastruktur erfolgen. Bei einem alleinigen Bestimmen auf der Zustellerinfrastruktur kann die Empfängerinfrastruktur besonders schlank gehalten werden, ein Einbeziehen von sowohl Empfängerinfrastruktur, als auch Zustellerinfrastruktur kann für den Empfänger besonders komfortabel sein und ist darüber hinaus sehr sicher.

Gemäß einer bevorzugten Ausführungsform kann der empfängerseitige Identifikator als Abbild bereitgestellt werden. Dies ermöglicht ein graphisches Erfassen des empfängerseitigen Identifikator. Das Abbild kann von der Empfängerinfrastruktur und/ oder der Zustellerinfrastruktur entkoppelt werden.

Damit weitere Akteure, beispielsweise Händler oder Retailer, aber auch ein weiterer unabhängiger Zustell- oder Auslieferungsdienstleister, auf besonders einfache Weise den empfängerseitigen Identifikator und/ oder den zustellerseitigen Identifikator verwenden, austauschen und weiterleiten können, kann die Zustellerinfrastruktur mindestens eine Zusatzinfrastruktur umfassen, welche adaptiert ist, mit der Empfängerinfrastruktur und/ oder der Zustellerinfrastruktur zu kommunizieren. Auf diese Weise kann das Gut besonders einfach an die weiteren Akteure übergeben werden und/ oder mit der Empfängerinfrastruktur kommunizieren. Die Übergabe des Gutes vom Zustellunternehmen an den weiteren Akteur und/ oder an den Empfänger kann so besonders einfach quittiert werden.

Um empfängerseitigen Identifikator und zustellerseitigen Identifikator zueinander und zu der Bestellung zuzuweisen, können der empfängerseitige Identifikator und der zustellerseitige Identifikator miteinander verknüpft sein.

Um nach der Bestellung eine besonders rasche Übergabe des Gutes zu ermöglichen, kann erst nach einer Einspeisung des Gutes in ein Zustellernetz das Bereitstellen des empfängerseitigen Identifikators zu der Bestellung auf der Empfängerinfrastruktur erfolgen. So kann das Gut nach seiner Einspeisung in das Zustellernetz bereits zumindest einen Teil seines Transportweges zurücklegen.

Um auf besonders einfache Weise den zustellerseitigen Identifikator zu dem Gut zuzuweisen, kann ein Markieren des Gutes mit dem zustellerseitigen Identifikator erfolgen.

Damit der empfängerseitige Identifikator und/ oder der zustellerseitige Identifikator auch ohne und unabhängig von elektronischen Geräten darstellbar sind, können der empfängerseitige Identifikator und/ oder der zustellerseitige Identifikator auf Papier gedruckt werden.

Hinsichtlich einer Vorrichtung wird die vorstehend genannte Aufgabe gelöst durch eine Zustellerinfrastruktur zum Quittieren einer Übergabe von einem Gut, insbesondere einer Postsendung, ein Empfangsmittel, ein Bereitstellungsmittel, ein Erfassungsmittel und ein Quittiermittel, wobei
- das Empfangsmittel adaptiert ist, eine Bestellung von einer Empfängerinfrastruktur zu empfangen;
- das Bereitstellungsmittel adaptiert ist, einen zustellerseitigen Identifikator auf der Zustellerinfrastruktur bereit zu stellen;
- das Erfassungsmittel adaptiert ist, einen empfängerseitigen Identifikator zu erfassen; und
- das Quittiermittel adaptiert ist, den empfängerseitigen Identifikator und den zustellerseitigen Identifikator abzugleichen und so die Übergabe des Gutes zu quittieren.

Gemäß einer bevorzugten Ausführungsform können die Zustellerinfrastruktur eine Hauptzustellerinfrastruktur und ein mobiles Lesegerät umfassen, wobei die Hauptzustellerinfrastruktur adaptiert ist, mit dem mobilen Lesegerät und mit der Empfängerinfrastruktur zu kommunizieren und das mobile Lesegerät adaptiert ist, den empfängerseitigen Identifikator zu erfassen und mit der Hauptzustellerinfrastruktur zu kommunizieren. So

Die erfindungsgemäße Lösung sieht ein System vor, umfassend Mittel, die adaptiert sind, das oben beschriebene Verfahren durchzuführen.

Bevorzugte Ausführungsformen der Erfindung werden nachfolgend anhand der Figuren beispielsweise näher erläutert. Dabei zeigen:
- Figur 1: eine schematische Darstellung der Interaktion zwischen Empfängerinfrastruktur und Zustellerinfrastruktur zum Quittieren einer Übergabe eines Gutes;
- Figur 2: ein mobiles Lesegeräts der Zustellerinfrastruktur bei der Übergabe eines Gutes; und
- Figur 3: Mittel der Zustellerinfrastruktur.

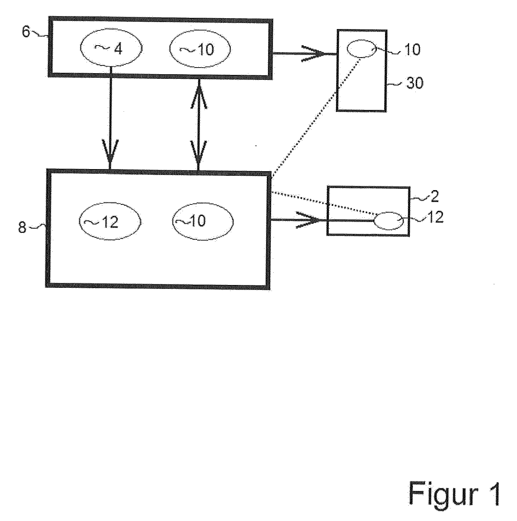

Figur 1 zeigt eine schematische Darstellung der Interaktion zwischen Empfängerinfrastruktur 6 und Zustellerinfrastruktur 8 eines Verfahrens zum Quittieren einer Übergabe von einem Gut 2 gemäß einer bevorzugten Ausführungsform der Erfindung. Ein Kunde bestellt beim Händler eine oder mehrere Waren, gibt also eine Bestellung 4 auf, die als Gut 2 verpackt von einem Zustellunternehmen an einen Empfänger geliefert werden. Im Folgenden wird zur Vereinfachung stets davon ausgegangen, dass der Kunde auch Empfänger des Gutes 2 ist, dies ist jedoch nicht zwingend der Fall. Das Gut 2 ist ein zustellbares Stückgut, beispielsweise ein Paket, ein Päckchen oder ein Brief.

Die Zustellerinfrastruktur 8 ist eine ausgedehnte Infrastruktur, die eine oder mehrere Zusatzinfrastrukturen umfasst, auf welche der Händler und allenfalls weitere Vertragspartner des Zustellunternehmens zugreifen können. Als Teil der Zustellerinfrastruktur 8 ist die Zusatzinfrastruktur adaptiert, mit der Empfängerinfrastruktur und/ oder der Zustellerinfrastruktur zu kommunizieren. Das Zustellunternehmen transportiert das Gut 2 über ein Zustellernetz von einem Händler zu einem Empfänger, der Händler stellt das Gut 2 zur Verfügung. Die Empfängerinfrastruktur 6 umfasst sämtliche elektronischen Geräte und Mittel, typischerweise ein Computer, ein Handy 28 und/ oder weitere mobile Endgeräte des Empfängers, die dem Empfänger zur Verfügung stehen und die adaptiert sind, mit der Zustellerinfrastruktur 8 zu kommunizieren. Auch Teil der Empfängerinfrastruktur 8 ist zudem ein Briefkasten des Empfängers oder ein alternativer Übergabeort, beispielsweise eine Garage, sowie sämtliche Mittel, beispielsweise Drucker und Papier, die er zur Erstellung eines Übergabezettels 30 benötigt.

Der Empfänger übermittelt die Bestellung 4 online und somit elektronisch mit seinem mobilen Endgerät, das Teil der Empfängerinfrastruktur 6 ist, an die Zustellerinfrastruktur 8, vorzugsweise direkt an die Zusatzinfrastruktur des Händlers. Prinzipiell könnte die Bestellung 4 auch schriftlich per Post oder fernmündlich, also telefonisch, übermittelt werden. Der Bestellung 4 wird ein eindeutiger zustellerseitiger Identifikator 12 zugewiesen, der auf der Zustellerinfrastruktur 8 bereitgestellt wird und der zunächst mindestens Informationen über die in dem Gut 2 enthaltene Ware enthält. Gut 2 und Bestellung 4 sind also eindeutig miteinander verknüpft. Da die Zustellerinfrastruktur 8 die Zusatzinfrastruktur des Händler umfasst, kann der Händler somit die Bestellung 4 direkt empfangen und das Gut 2 mit dem zustellerseitigen Identifikator 12 markieren. Hierzu wird ein Abbild des zustellerseitigen Identifikator 12 auf Papier gedruckt mit allfälligen Zusatzinformationen, beispielsweise eine eindeutige Identifikationsnummer, und das Papier auf das Gut 2 geklebt wird. Alternativ könnte der zustellerseitige Identifikator 12 auch direkt auf das Paket gedruckt werden. Der Händler übergibt das Gut 2 an das Zustellunternehmen, welches das Gut 2 in das Zustellernetz einspeist. Da sowohl das Zustellunternehmen, als auch der Händler Zugang zur Zustellerinfrastruktur 8 haben, kann auch diese Übergabe mit Hilfe des zustellerseitigen Identifikators 12 quittiert werden.

Der Bestellung 4 wird zudem ein empfängerseitiger Identifikator 10 zugewiesen. Der empfängerseitige Identifikator 12 wird vorzugsweise durch die Zustellerinfrastruktur 8 generiert und im Anschluss elektronisch an die Empfängerinfrastruktur 6 übermittelt. Empfängerseitiger Identifikator 10 und zustellerseitiger Identifikator 12 sind durch ihre Zuweisung zu der Bestellung 4 eindeutig miteinander verknüpft. Ein Generieren des empfängerseitigen Identifikator 12 kann jedoch prinzipiell auch auf der Empfängerinfrastruktur 6 erfolgen, beispielsweise mit einer von der Zustellerinfrastruktur 8 zur Verfügung gestellten App auf dem Handy 28 des Empfängers.

Graphisch als Abbild werden der empfängerseitige Identifikators 10 und/ oder der zustellerseitige Identifikator 12 als maschinenlesbare Codes dargestellt, besonders geeignet sind optoelektronisch lesbare 2D-Codes. Der empfängerseitige Identifikators 10 und/ oder der zustellerseitige Identifikator 12 sind eine - verschlüsselte oder unverschlüsselte - Abbildung von Daten. Auf der Zustellerinfrastruktur 8 und/ oder der Empfängerinfrastruktur 6 kann ihr Informationsgehalt nach Erfassen des entsprechenden Abbilds rekonstruiert und angezeigt werden. Um ein örtlich flexibles Erfassen des empfängerseitigen Identifikators 10 und/ oder des zustellerseitigen Identifikators 12 zu ermöglichen, umfasst die Zustellerinfrastruktur mindestens ein mobiles Lesegerät 24, welches für das Erfassen des empfängerseitigen Identifikators 10 und/ oder des zustellerseitigen Identifikators 12 adaptiert ist.

Dem Empfänger wird das Einspeisen in das Zustellernetz, also das Versenden des Gutes 2 kommuniziert und dieser kann die von der Zustellerinfrastruktur 8 vorgeschlagenen, elektronisch übermittelten Übergabeparameter, beispielsweise Übergabezeit und/ oder Übergabeort, anpassen. Das empfängerseitige Bestimmen der Übergabeparameter erfolgt unabhängig vom Übergabeort mit dem zur Empfängerinfrastruktur 6 zugehörigen mobilen Endgerät des Empfängers durch den Empfänger auf der Zustellerinfrastruktur 8 und/ oder auf der Empfängerinfrastruktur 6. Nach dem Austauschen der Übergabeparameter zwischen der Empfängerinfrastruktur 6 und der Zustellerinfrastruktur 8 werden diese dem empfängerseitigen Identifikator 10 und/ oder dem zustellerseitigen Identifikator 12 zugewiesen, wodurch der empfängerseitige Identifikator 10 und/ oder zustellerseitige Identifikator 12 auf der Zustellerinfrastruktur 8 und/ oder auf der Empfängerinfrastruktur 6 aktualisiert werden. Der aktualisierte empfängerseitige Identifikator 10 und/ oder der aktualisierte zustellerseitige Identifikator 12 werden von der Empfängerinfrastruktur 6 an die Zustellerinfrastruktur 8 oder umgekehrt bereitgestellt. Ein empfängerseitiges Bestimmen und ein Kommunizieren der Übergabeparameter über die Identifikatoren 10, 12 erfolgt vor einem ersten Zustell- bzw. Übergabeversuch des Gutes 2.

Das Gut 2 wird von einem Zusteller, der zu dem Zustellunternehmen gehört oder mit diesem assoziiert ist, an den gewählten Übergabeort geliefert. Der empfängerseitige Identifikators 12 wird auf der Empfängerinfrastruktur 8 bereitgestellt, indem der Empfänger ein Abbild des empfängerseitigen Identifikators 10 als Übergabezettel 30 ausdruckt und diesen am vereinbarten Übergabeort, beispielsweise der Briefkasten oder die Garage des Empfängers, deponiert. Vorzugsweise umfasst das Abbild des empfängerseitigen Identifikators 10 auf dem Übergabezettel 30 auch eine eindeutige Identifikationsnummer und/ oder weitere Übergabeinformationen, beispielsweise Name und/ oder Adresse des Empfängers, mit dem der empfängerseitige Identifikator 10 auch ohne technische Hilfsmittel wie dem mobilen Lesegerät 30 identifiziert und dem Gut 2 zugeordnet werden kann. Dies ist besonders dann relevant, wenn der Zusteller mehrere Güter 2 an den gleichen Übergabeort liefert, da dann mehrere Übergabezettel am Übergabeort deponiert sind. Der Zusteller kann auf diese Weise ohne weitere Verwendung technischer Hilfsmittel erkennen, welcher Übergabezettel 30 zu welchem Gut 2 gehört und spart so Zeit, da er so nicht erst den nicht zum Gut 2 gehörigen empfängerseitigen Identifikator 10 scannen muss.

Der empfängerseitige Identifikator 10 auf dem Übergabezettel 30 und der zustellerseitige Identifikator 12 auf dem Gut 2 werden vom Zusteller mit dem mobilen Lesegerät 24 erfasst. Der empfängerseitige Identifikator 10 und der zustellerseitige Identifikator 12 werden auf der Zustellerinfrastruktur 8 abgeglichen, das Gut 2 wird am Ablageort deponiert und die Übergabe wird quittiert. Durch das Erfassen des Abbilds des empfängerseitigen Identifikators 10 am Übergabeort besteht keine Beweisproblematik für den Zusteller, ob er tatsächlich am Übergabeort gewesen ist. Dieses Vorgehen eignet sich auch für das Quittieren eines Einschreibens.

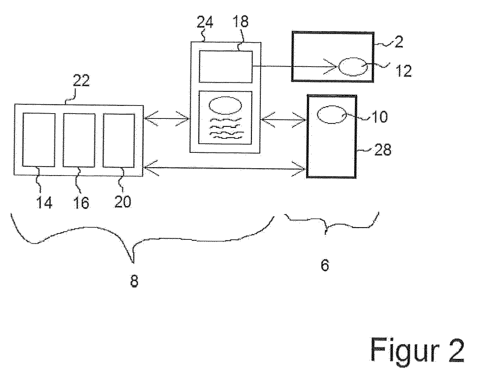

Figur 2 zeigt die Rolle eines mobilen Lesegeräts 24 als Teil der Zustellerinfrastruktur 8 bei der Übergabe eines Gutes 2 gemäß einer bevorzugten Ausführungsform der Erfindung. Das mobile Lesegerät 24 umfasst ein Erfassungsmittel 18, welches adaptiert ist, mindestens den empfängerseitigen Identifikator 10 zu erfassen. Das in Figur 2 dargestellte Erfassungsmittel 19 ist zudem adaptiert für das Erfassen des zustellerseitigen Identifikators 12. Die Zustellerinfrastruktur 8 umfasst das mobile Lesegerät 24 und eine Hauptzustellerinfrastruktur 22. Die Hauptzustellerinfrastruktur 22 ist vorteilhaft als Server ausgestaltet, der adaptiert ist zur Kommunikation mit der Empfängerinfrastruktur 6. Das mobile Lesegerät 24 ist adaptiert zur Kommunikation mit der Hauptzustellerinfrastruktur 22. Der empfängerseitige Identifikator 10 und der zustellerseitige Identifikator 12 werden auf der Zustellerinfrastruktur 8 abgeglichen. Nur bei einem erfolgreichen Abgleich wird das Gut 2 übergeben, wobei das Quittieren der Übergabe des Gutes 2 durch das Abgleichen erfolgt.

Um das Gut 2 sicher zu übergeben und um die Übergabe zu quittieren, wird vom Zusteller der vom Empfänger bereitgestellte empfängerseitige Identifikator 10 und zur Sicherheit auch das auf dem Gut 2 angebrachte Abbild des zustellerseitigen Identifikators 12 mit dem mobilen Lesegerät erfasst.

Der empfängerseitige Identifikator 10 wird von der Empfängerinfrastruktur 6 als Abbild bereitgestellt - auf dem Display eines elektronischen Gerätes, vorzugsweise auf dem Handy 28 des Empfängers, oder wie in Figur 1 dargestellt mit einem Übergabezettel 30, einem Papier, auf dem der empfängerseitige Identifikator gedruckt ist. Während der Übergabezettel 30 problemlos am Übergabeort deponiert und so die Übergabe in Abwesenheit des Empfängers erfolgen kann, möchte wohl kein Empfänger sein Handy 28 oder ein anderes wertvolles elektronisches Gerät am Übergabeort deponieren, so dass eine persönliche Übergabe von Mensch zu Mensch erforderlich ist. Der empfängerseitige Identifikator 10 kann jedoch vom ursprünglichen Empfänger an eine Person seines Vertrauens weitergegeben werden, die Weitergabe erfolgt elektronisch oder in Papierform. Das Bereitstellen des empfängerseitigen Identifikator 10 auf dem Display eines Handys 28 oder auf Papier wie in Figur 1 stellt eine übertragbare Übergabeberechtigung dar. Als Übergabeort kann das Zuhause des Empfängers oder der Person seines Vertrauens sein oder aber eine Postdienststelle oder Versandabholstelle als Übergabeparameter ausgewählt worden sein.

Anstelle eines graphischen Abbilds des empfängerseitigen Identifikators 10 könnten prinzipiell auch biometrische Informationen des Empfängers als Übergabeberechtigung verwendet werden. Dies würde jedoch die persönliche Anwesenheit des Empfängers bei der Übergabe erfordern, ist dafür aber noch fälschungssicherer als eine Identifizierung über Unterschrift und evtl. noch Ausweisdokumente.

Die Zustellerinfrastruktur 8 umfasst zudem noch ein Empfangsmittel 14, ein Bereitstellungsmittel 16 und ein Quittiermittel 20. Das Empfangsmittel 14 ist adaptiert, die Bestellung 4 von der Empfängerinfrastruktur 6 zu empfangen. Das Bereitstellungsmittel 16 ist adaptiert, einen zustellerseitigen Identifikator 12 auf der Zustellerinfrastruktur 8 bereit zu stellen und das Quittiermittel 20 ist adaptiert, den empfängerseitigen Identifikator 10 und den zustellerseitigen Identifikator 12 abzugleichen und so die Übergabe des Gutes 2 zu quittieren. Das mobile Lesegerät 24 kommuniziert mit der Hauptzustellerinfrastruktur 22 und diese wiederum mit dem Handy 28 oder einem anderen elektronischen Gerät des Empfängers, so dass dem Empfänger stets der Status der Übergabe des Gutes 2 kommuniziert werden kann.

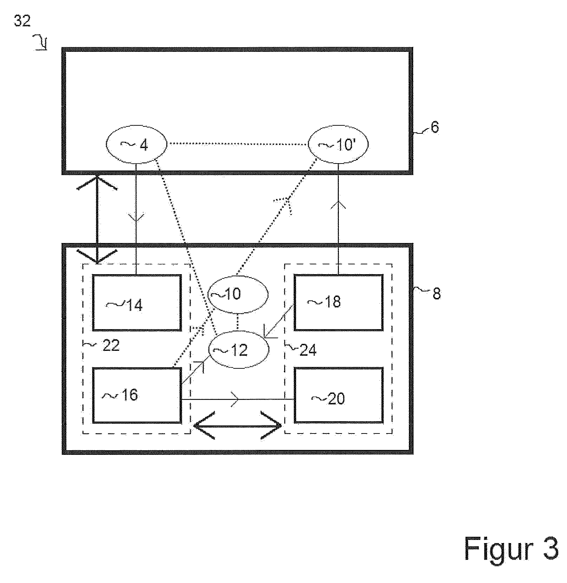

Figur 3 zeigt gemäß einer bevorzugten Ausführungsform der Erfindung ein System 32, umfassend Mittel, die adaptiert sind, eine Übergabe eines Gutes 2 zu quittieren. Das System 32 umfasst Empfängerinfrastruktur 6 und Zustellerinfrastruktur 8. Die Zustellerinfrastruktur 8 umfasst eine Hauptzustellerinfrastruktur 22 und ein mobiles Lesegerät 24, welches das Quittiermittel 20 und das Erfassungsmittel 18 umfasst. In der in Figur 2 dargestellten Ausführungsform war das Quittiermittel 20 Teil der Hauptzustellerinfrastruktur 22 und nicht Teil des mobilen Lesegeräts 24. Entscheidend ist, dass die Hauptzustellerinfrastruktur 22 adaptiert ist, mit dem mobilen Lesegerät 24 und mit der Empfängerinfrastruktur 6 zu kommunizieren und dass das mobile Lesegerät 24 adaptiert ist, den empfängerseitigen Identifikator 10 zu erfassen und mit der Hauptzustellerinfrastruktur 22 zu kommunizieren. Die Zustellerinfrastruktur 8 umfasst zudem das Zustellernetz mit einem menschlichem Zusteller, Zustellerfahrzeug und mindestens einem Sortierzentrum.

Gemäß einer weiteren Ausführungsform erfolgt erst nach einer Einspeisung des Gutes 2 in ein Zustellernetz das Bereitstellen des empfängerseitigen Identifikators 10 zu der Bestellung 4 auf der Empfängerinfrastruktur 6, damit der Empfänger das Gut 2 möglichst rasch nach Übermitteln seiner Bestellung 4 an die Zustellerinfrastruktur 8 erhalten kann. Das Gut 2 wird also schon vor Aufgabe einer Bestellung 4 versendet. Für viele Güter 2 ist es möglich, über intelligente statistische Verfahren herauszubekommen, welche Güterströme im Zustellernetz typischerweise bestehen, so dass ermittelt werden kann, welche Anzahl gleichartige Güter 2 an einem Tag ein bestimmtes Sortierzentrum voraussichtlich passieren werden. Diese Anzahl an Gütern 2 wird mit einem zustellerseitigen Identifikator 12 versehen also bereits vor der antizipierten Bestellung durch den Empfänger in Richtung des Sortierzentrums transportiert. Ein Teil des gesamten Transportweges des Gutes 2 wird so schon vor dem Übermitteln der Bestellung 4 zurückgelegt, der zustellerseitige Identifikator 12 und somit das Gut 2 werden der Bestellung 4 somit erst im Anschluss an das Einspeisen in das Zustellernetz zugewiesen und nicht wie oben beschrieben bereits beim Zuweisen des zustellerseitigen Identifikators 12. Der Versandweg der Güter 2 wird also zunächst rein über den zustellerseitigen Identifikator 12 gesteuert und verfolgt, schon bevor ein empfängerseitiger Identifikator 10 generiert wurde.

Sobald die Zustellerinfrastruktur 8 die Bestellung 4 von der Empfängerinfrastruktur 6 erhält, wird ein empfängerseitiger Identifikator 10 generiert und mit dem zustellerseitigen Identifikator 12 verknüpft. Der empfängerseitige Identifikator 10 wird elektronisch an die Empfängerinfrastruktur 6 übermittelt. Dem zustellerseitigen Identifikator 12 wird der Empfänger mit seiner Lieferadresse zugewiesen. Bei der Auslieferung des Gutes 2 kann mit Hilfe des mobilen Lesegeräts 24 der Zustellerinfrastruktur 8, welches adaptiert ist, Informationen des empfängerseitigen Identifikators 10 und/ oder des zustellerseitigen Identifikators 12 anzuzeigen, die Lieferadresse angezeigt werden. Es muss kein erneutes Markieren des Gutes 2 mit einem Adresslabel erfolgen, was mit Zeit und Kosten verbunden wäre. Außerdem entfällt Lagerraum im Zustellernetz, da die Güter 2 nicht erst eingelagert werden müssen.

Um die Übergabe des Gutes 2 zu bestätigen, stellt der Empfänger den empfängerseitigen Identifikator 10 am vereinbarten Übergabeort bereit, welcher von dem mobilen Lesegerät 24 der Zustellerinfrastruktur 8 erfasst wird. Das mobile Lesegerät 24 stellt eine Online-Verbindung zur Hauptzustellerinfrastruktur 22 her. Es erfolgt ein Abgleich von empfängerseitigem Identifikator 10 und zustellerseitigem Identifikator 12, wobei ein erfolgreicher Abgleich die Übergabe quittiert.

Gemäß einer weiteren Ausführungsform sind der empfängerseitige Identifikator 10 und der zustellerseitige Identifikator 12 ganz oder zumindest teilweise identisch. Die Abbilder der Identifikatoren 10, 12 können, müssen aber nicht einen ersten Teil und einen zweiten Teil umfassen. Der erste Teil ist maschinell erfassbar und der zweite Teil ist ohne technische Hilfsmittel erfassbar, so dass eine Zuordnung auch bei einem Ausfall technischer Geräte erfolgen kann. Ein ausgedruckter Übergabezettel 30 kann bei einem Ausfall auch als Bestätigung einfach vom Zusteller mitgenommen werden. Der zweite Teil ist insbesondere auch bei einer gleichzeitigen Übergabe von mehr als einem Gut 2 nützlich.

### Bezugszeichenliste

- 2: Gut
- 4: Bestellung
- 6: Empfängerinfrastruktur
- 8: Zustellerinfrastruktur
- 10: empfängerseitiger Identifikator
- 12: zustellerseitiger Identifikator
- 14: Empfangsmittel
- 16: Bereitstellungsmittel
- 18: Erfassungsmittel
- 20: Quittiermittel
- 22: Hauptzustellerinfrastruktur
- 24: mobiles Lesegerät
- 26: Anzeige
- 28: Handy
- 30: Übergabezettel
- 32: System

## Patentansprüche

1. Verfahren zum Quittieren einer Übergabe von einem Gut (2), insbesondere einer Postsendung, umfassend die Verfahrensschritte:
a) Übersenden einer Bestellung (4) von einer Empfängerinfrastruktur (6) zu einer Zustellerinfrastruktur (8);
b) Bereitstellen eines empfängerseitigen Identifikators (10) zu der Bestellung (4) auf der Empfängerinfrastruktur (6);
c) Bereitstellen eines zustellerseitigen Identifikators (12) auf der Zustellerinfrastruktur (8);
d) Erfassen des empfängerseitigen Identifikators (10) durch die Zustellerinfrastruktur (8); und
e) Quittieren der Übergabe des Gutes (2) indem der empfängerseitige Identifikator (10) und der zustellerseitige Identifikator (12) abgeglichen werden.

2. Verfahren nach Anspruch 1, **gekennzeichnet durch**
elektronisches Übermitteln des empfängerseitigen Identifikators (10) von der Zustellerinfrastruktur (8) zur Empfängerinfrastruktur (6).

3. Verfahren nach einem der Ansprüche 1 bis 2, **dadurch gekennzeichnet, dass**
der empfängerseitige Identifikator (10) vorzugsweise durch die Zustellerinfrastruktur (8) generiert wird.

4. Verfahren nach einem der Ansprüche 1 bis 3, **dadurch gekennzeichnet, dass**
der empfängerseitige Identifikator (10) und/ oder der zustellerseitige Identifikator (12) maschinenlesbar, vorzugsweise optoelektronisch lesbar, ist, beispielsweise als 2D-Code.

5. Verfahren nach einem der Ansprüche 1 bis 4, **gekennzeichnet durch**
Austauschen von Übergabeparametern, beispielsweise Übergabeort und/ oder Übergabezeit, zwischen der Empfängerinfrastruktur (6) und der Zustellerinfrastruktur (8) und Bereitstellen besagter Übergabeparameter zu dem empfängerseitigen Identifikator (10) und/ oder dem zustellerseitigen Identifikator (12).

6. Verfahren nach Anspruch 5, **dadurch gekennzeichnet, dass** das Bestimmen der Übergabeparameter empfängerseitig auf der Empfängerinfrastruktur (6) und/ oder der Zustellerinfrastruktur (8) erfolgt.

7. Verfahren nach einem der Ansprüche 1 bis 6, **dadurch gekennzeichnet, dass**
der empfängerseitige Identifikator (10) als Abbild bereitgestellt wird.

8. Verfahren nach einem der Ansprüche 1 bis 7, **dadurch gekennzeichnet, dass**
die Zustellerinfrastruktur (8) mindestens eine Zusatzinfrastruktur umfasst, welche adaptiert ist, mit der Empfängerinfrastruktur (6) und/ oder der Zustellerinfrastruktur (8) zu kommunizieren.

9. Verfahren nach einem der Ansprüche 1 bis 8, **dadurch gekennzeichnet, dass**
der empfängerseitige Identifikator (10) und der zustellerseitige Identifikator (12) miteinander verknüpft sind.

10. Verfahren nach einem der Ansprüche 1 bis 9, **dadurch gekennzeichnet, dass**
erst nach einer Einspeisung des Gutes (2) in ein Zustellernetz das Bereitstellen des empfängerseitigen Identifikators (10) zu der Bestellung auf der Empfängerinfrastruktur (6) erfolgt.

11. Verfahren nach einem der Ansprüche 1 bis 10, **gekennzeichnet durch**
Markieren des Gutes (2) mit dem zustellerseitigen Identifikator (12).

12. Verfahren nach einem der Ansprüche 1 bis 11, **dadurch gekennzeichnet, dass**
der empfängerseitige Identifikator (10) und/ oder der zustellerseitige Identifikator (12) auf Papier gedruckt wird.

13. Zustellerinfrastruktur (8) zum Quittieren einer Übergabe von einem Gut (2), insbesondere einer Postsendung, umfassend ein Empfangsmittel (14), ein Bereitstellungsmittel (16), ein Erfassungsmittel (18) und ein Quittiermittel (20), **dadurch gekennzeichnet, dass**
- das Empfangsmittel (14) adaptiert ist, eine Bestellung (4) von einer Empfängerinfrastruktur (6) zu empfangen;
- das Bereitstellungsmittel (16) adaptiert ist, einen zustellerseitigen Identifikator (12) auf der Zustellerinfrastruktur (8) bereit zu stellen;
- das Erfassungsmittel (18) adaptiert ist, einen empfängerseitigen Identifikator (10) zu erfassen; und
- das Quittiermittel (20) adaptiert ist, den empfängerseitigen Identifikator (10) und den zustellerseitigen Identifikator (12) abzugleichen und so die Übergabe des Gutes (2) zu quittieren.

14. Zustellerinfrastruktur (8) nach Anspruch 13, **dadurch gekennzeichnet, dass**
die Zustellerinfrastruktur (8) eine Hauptzustellerinfrastruktur (22) und ein mobiles Lesegerät (24) umfasst, wobei die Hauptzustellerinfrastruktur (22) adaptiert ist, mit dem mobilen Lesegerät (24) und mit der Empfängerinfrastruktur (6) zu kommunizieren und das mobile Lesegerät (24) adaptiert ist, den empfängerseitigen Identifikator (10) zu erfassen und mit der Hauptzustellerinfrastruktur (22) zu kommunizieren.

15. System, umfassend Mittel, die adaptiert sind, ein Verfahren nach einem der Ansprüche 1 bis 12 durchzuführen.
